# EUROPEAN PATENT SPECIFICATION

(11) **EP 2 707 223 B1**
(45) Date of publication and mention of the grant of the patent: **26.12.2018**
(21) Application number: 12782683.2
(22) Date of filing: 09.05.2012
(51) Int. Cl.: B32B 27/10, B32B 27/20, D21H 19/38, D21H 19/60, B65D 85/36, D21H 19/40, B65D 65/38, B65D 65/42, D21H 27/10, B65D 81/24

(54) **A MATERIAL FOR PACKAGING OF FOODSTUFF, AND A PACKAGE FOR FOODSTUFF**
MATERIAL ZUM VERPACKEN VON NAHRUNGSMITTELN UND VERPACKUNG FÜR NAHRUNGSMITTEL
MATÉRIAU POUR L'EMBALLAGE D'ALIMENTS ET EMBALLAGE POUR ALIMENTS

(30) Priority: 11.05.2011 FI 20115458
(43) Date of publication of application: 19.03.2014
(60) Divisional application: 18202807.6
(73) Proprietor: UPM Specialty Papers Oy, 00100 Helsinki (FI)
(72) Inventor: KUNNAS, Leena, FI-53100 Lappeenranta (FI); KOSKINEN, Kaj, FI-37630 Valkeakoski (FI); LEHMUSKALLIO, Timo, FI-00160 Helsinki (FI); HAVERI, Marko, FI-45370 Valkeala (FI); SAARI, Markus, FI-33820 TAMPERE (FI); SIRÉN, Annikki, FI-54960 Vehkataipale (FI)
(74) Representative: Berggren Oy, Tampere
(86) International application number: PCT/FI2012/050451
(87) International publication number: WO 2012/153002

(56) References cited:
- WO-A1-94/28243
- WO-A1-94/28243
- WO-A1-2009/112255
- WO-A2-2007/125312
- WO-A2-2010/052571
- JP-A- 2007 030 941
- US-A- 5 358 790

## Description

### Field of the invention

The invention relates to a material for packaging of foodstuff. Further, the invention relates to a package for foodstuff.

### Background of the invention

In industry, a large variety of packaging materials are manufactured for packaging foodstuffs. For example, bread is typically packaged in either a package made of a material coated with plastic, a plastic package, or a paper package.

Plastic or a packaging material coated with plastic is normally used when the aim is to keep the foodstuff, such as fresh bread, saleable for several days. A material coated with plastic typically prevents the surface of for example said fresh bread from drying, but at the same time it causes softening of the surface of the product.

Paper material, in turn, is typically used when the aim is to keep the surface of the foodstuff, such as fresh bread to be packed, crispy. Thus, said fresh bread typically has to be sold on the packaging day, because otherwise the surface of said bread dries too much and the crust becomes too thick.

Consequently, there is still a need for better packaging materials in the industry.

### Brief summary of the invention

It is an aim of this invention to present a material which is particularly well suited for the packaging of foodstuffs, such as bread. Further, it is an aim of this invention to present a food package comprising said material. The material for packaging food, and/or the food package according to the invention can keep, for example, the crust of fresh bread more crispy compared with a plastic package of prior art or a package coated with plastic. Nevertheless, the product packed in the material according to the invention can remain saleable longer than, for example, when a paper bag of prior art is used as the packaging material.

In the solution according to the invention, the material for packaging foodstuff comprises base paper, wherein
said base paper is coated on at least one side with a coating, which coating consists of
- one or more flaky coating pigments comprising at least 50% of kaolin, and
- polyvinyl alcohol,
wherein
- the ratio between the flaky coating pigment and polyvinyl alcohol is between 50:50 and 70:30, and wherein
   the content of the coating, in dry weight, is 1 to 7 g per m², and the Cobb water resistance of the material is 20 to 45 g/m², when measured according to the standard ISO 535:1991, and the water vapour transmission rate at an air humidity of 50% and a temperature of 23°C is 80 to 400 g per m² per day.

To achieve the aim of the invention, the material for packaging foodstuff according to the invention is primarily characterized in what will be presented in the appended claim 1. The food package according to the invention is primarily characterized in what will be presented in the appended claim 5.

In an example, the material according to the invention is intended for the packaging of bakery products, such as hamburgers or pastries. In an advantageous example, the material according to the invention for packaging foodstuffs is intended for the packaging of fresh bread. In a third example, the material for packaging foodstuff according to the invention is intended for the packaging of dry products, such as dried bread and/or crispbread.

The material and the food package according to the invention have several advantages. The material according to the invention can be manufactured in such a way that appropriate water permeability, water vapour permeability as well as air permeability are achieved. This has not been possible with packaging materials of prior art.

The material according to the invention for packaging foodstuffs, as well as the food package according to the invention can be manufactured in an environmentally friendly way so that the material and/or food package can be, for example, recycled and/or composted and/or burnt after usage. The product is very suitable for use with foodstuffs, and it may enable the product to be packaged to maintain the desired properties longer, for example the maintenance of the crust of fresh bread crispy for a longer time so that the bread is still saleable.

### Description of the drawings

In the following, the invention will be described in more detail with reference to the appended drawings, in which:
- Fig. 1: shows a material according to an embodiment of the invention for packaging foodstuffs, in a cross-sectional view, and
- Fig. 2: shows a food package according to an embodiment.

### Detailed description of the invention

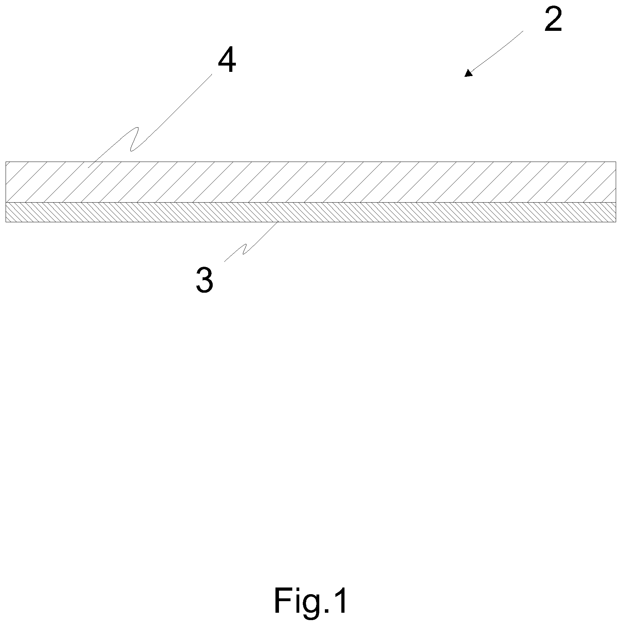

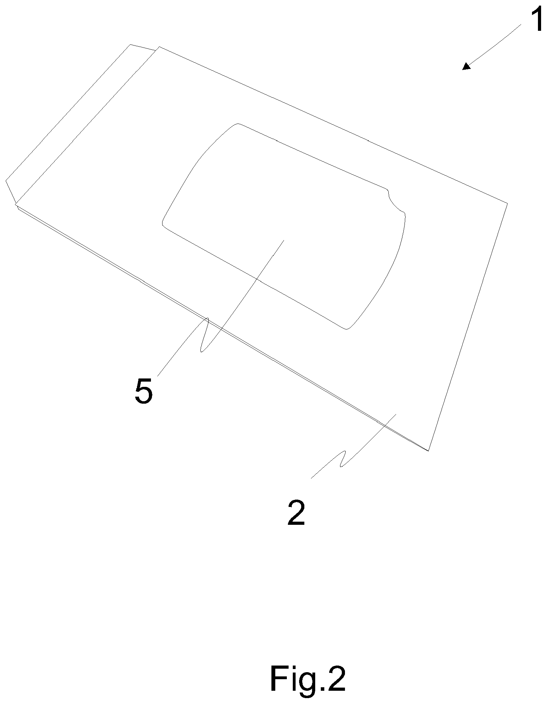

In this application, reference will be made to Figs. 1 and 2, in which the following reference numerals are used:
- 1: food package,
- 2: material for packaging foodstuffs, packaging material,
- 3: coating,
- 4: base paper, and
- 5: location in the food package where no material 2 has been used.

In this application, the term gsm refers to grams per square meter (g/m²).

The term "RH" relates to relative humidity of the air.

The term "flaky coating pigment" refers to coating pigments present in a flaky form. The term "flaky" refers to a structure in which one dimension is substantially smaller than the two other dimensions of the structure. Advantageously, the flaky coating pigment comprises talc, kaolin, and/or mica. According to an advantageous example, the content of kaolin in the flaky coating pigments used in the coating is 50 wt%, 60 wt%, 70 wt%, 80 wt%, 90 wt%, 95 wt%, or 100 wt%, including any ranges and partial ranges.

The term "base paper" 4 refers to paper of prior art comprising natural fibres as its main raw material. Further, the base paper may comprise, for example, one or more fillers and/or additives. The base paper is preferably uncoated paper. In an example, the base paper is so-called bag paper, such as so-called machine glazed (MG) paper. One side of MG paper is typically smoother than the other side of the paper.

The term "natural fibre" refers to any plant material that contains cellulose. The natural fibre may be wood-based. The wood may be softwood, such as spruce, pine, silver fir, larch, Douglas fir, or Canadian hemlock; or hardwood, such as birch, aspen, poplar, alder, eucalyptus, or acacia; or a mixture of softwood and hardwood. Other than wood-based raw materials may include agricultural waste, grasses or other plant materials, such as straw, leaves, bark, seeds, legumes, flowers, tops, or fruit, which have been obtained from cotton, corn, wheat, oat, rye, barley, rice, flax, hemp, Manila hemp, sisal hemp, jute, ramee, kenaf hemp, bagasse, bamboo, or reed. Preferably, the natural fibre comprises chemically pulped natural fibre, that is, pulp made in a chemical pulping process. In an advantageous example, the content of chemically pulped natural fibres in all the natural fibres used in the base paper product is thus at least 70 wt%, at least 80 wt% or at least 90 wt%, advantageously at least 95 wt% or 98 wt%. Preferably, all the natural fibres used in the base paper are chemically pulped natural fibres. The diameter of the natural fibres is normally 15 to 25 µm and the length more than 500 µm, but the present invention is not intended to be limited to these parameters.

The term "PVA" refers to polyvinyl alcohol.

The term "WVTR" refers to water vapour transmission rate, *i.e.* water vapour barrier at conditions of RH 50%, temperature 23°C.

The term "KIT" refers to a determining method according to the Tappi standard (Tappi T559 cm02) for paper and paperboard with oil and grease resistance. The term "Cobb" refers to the so-called Cobb value measured according to the standard ISO 535:1991. "Air permeability" is measured according to the standard ISO 5636-5:2003. "Water vapour permeability" is measured according to the standard ISO 2528:1995.

The material 2 according to the invention for packaging of foodstuffs comprises base paper 4 coated on one side or both sides. Preferably, the base paper 4 is coated on one side only. The coating 3 comprises flaky coating pigment and polyvinyl alcohol (PVA). In an advantageous example, the grammage of the material 2 according to the invention, comprising base paper 4 and coating 3, is 40 to 80 gsm.

In an example, the flaky coating pigment is substantially dry when it is applied as a coating 3 onto the base paper 4. In another example, the flaky coating pigment is in the form of an aqueous mixture or a so-called slurry when applied as a coating 3 onto the base paper 4.

The properties of a mixture that comprises flaky coating pigment, such as kaolin, and polyvinyl alcohol, can be adjusted, for example by changing the thickness of the coating layer 3 so that the insulating capacity of the coating 3 is typically improved when the thickness of the coating layer 3 is increased. Furthermore, the properties can be influenced, among other things, by changing the relative contents of the flaky coating pigment and polyvinyl alcohol. When the content of the flaky coating pigment increases in relation to the content of polyvinyl alcohol, the viscosity of the coating typically decreases and its porosity increases.

The relative proportion of one or more flaky coating pigments in the total content of said one or more flaky coating pigments and polyvinyl alcohol is at least 40 wt% (wherein the content of polyvinyl alcohol is not higher than 60 wt% of the total content of said one or more flaky coating pigments and polyvinyl alcohol), more advantageously 45 to 80 wt% (wherein the content of polyvinyl alcohol is 20 to 55 wt%), and even more advantageously 50 to 70 wt% (wherein the content of polyvinyl alcohol is 30 to 50% of the total content of said one or more flaky coating pigments and polyvinyl alcohol).

If the proportion of polyvinyl alcohol to the flaky coating pigment is increased, it may be possible to reduce the total quantity of the coating 3 used. In a corresponding manner, if the proportion of the flaky coating pigment to polyvinyl alcohol is increased, a thicker coating layer may be needed.

The pigment coating can be applied on one side of the base paper, or it can be applied on both sides of the base paper. The pigment coating may comprise a single coating layer, or it may comprise several coating layers, such as two, three or four coating layers. For coating the base paper, it is possible to use solutions of prior art, such as one or more of the following: blade coating, flooded nip application, nozzle application, short dwell time application, rod coating, air brush coating, film transfer coating, curtain coating, or spray coating. In an advantageous example, at least one coating layer is formed by film transfer coating, rod coating, or blade coating. The total (dry) content of the coating of the material according to the invention is preferably 1 to 14 gsm, irrespective of whether the base paper is coated on one side or both sides.

In an advantageous example, the content of the coating 3 in the finished material 2 is at least 1 gsm and not more than 7 gsm, more advantageously not more than 6 gsm or 5 gsm. Advantageously, the water vapour transmission rate (WVTR, 23°C, RH 50%) of the finished mate rial is thus 80 to 400 gsm per day, for example 120 to 280 gsm per day. Advantageously, the grease resistance of the finished material, measured by the Oil Unger (60 s) method, is thus 1.3 to 1.8, for example 1.4 to 1.6. Advantageously, the water resistance of the finished material, measured by the Cobb (1800 s) test, is thus 20 to 45, for example 22 to 30. Advantageously, the KIT value of such material is thus 1 to 2. In an advantageous example, the ratio between the flaky coating pigment and PVA (pigment PVA) is thus between 50:50 and 70:30. The material 2 having one or more of the above-mentioned properties may be suitable for the packaging of, for example, fresh bread.

In an advantageous example, the content of the coating 3 in the material 2 is 6 to 14 gsm, for example 8 to 12 gsm. Advantageously, the water vapour transmission rate (23°C, RH 50%) of the finished ma terial 2 is thus 2 to 12 gsm per day, for example 3 to 8 gsm per day. Advantageously, the grease resistance of the material 2, measured by the Oil Unger (60 s) method, is thus 0.3 to 1.3, more advantageously 0.3 to 0.7. Advantageously, the water resistance of the material 2, measured by the Cobb (1800 s) test, is thus 17 to 35, for example 18 to 25. In an example, the KIT value is thus 4 to 9, for example 5 to 8. In an advantageous example, the coating pigment to PVA ratio of such a material 2 is formed so that the content of PVA is at least 40 wt% or at least 50 wt%. A material 2 having one or more of the above listed properties may be suitable for the packaging of bakery products, such as, for example, greasy and dry foodstuffs and/or greasy and moist foodstuffs. Such foodstuffs may include, for example, hamburgers or pastries. As the content of the coating 3 increases, the grease resistance of the material 2 is typically improved, which is useful, for example, in the packaging of greasy products.

Preferably, the coating 3 consists totally or substantially totally of one or more flaky coating pigments and polyvinyl alcohol.

The coating material 2 according to the invention can be used for forming a food package 1. In an advantageous example, the food package 1 is a bag or has a substantially bag-like shape. The food package 1 may or may not also comprise one or more other materials 5 than the material 2 according to the invention, for example as a so-called "window". However, even in such a case, the content of the material 2 according to the invention is at least 50%, more advantageously at least 60% or at least 70%, and most advantageously at least 80% or at least 90% of the surface area of the outer layer of said food package 1.

In an example, the material 2 for packaging foodstuffs is used for packaging fresh bread. In another example, the material 2 for packaging foodstuffs is used for packaging bakery products, such as hamburgers or pastries. In a third example, the material 2 is used for packaging dry products, such as dried bread and/or crispbread.

### Example

Pilot tests were carried out on three different material samples according to the invention and two materials of prior art. In the first sample according to the invention, "Barrier paper 1", the coating content was 4 gsm. In the second sample according to the invention, "Barrier paper 2", the coating content was 3 gsm. In the third sample according to the invention, "Barrier paper 3", the coating content was 2 gsm. The materials of prior art comprised an uncoated bread bag paper and a bread bag paper coated with bioplastic.

Water vapour transmission rate, water permeability and air permeability were measured from all materials. These results can be read in Table 1. Furthermore, fresh bread packed in each material was examined after three days from packaging of said fresh bread.

**Table 1.**

| **Sample** | **WVTR RH 50% (g/m²/day)** | **Cobb 60 s (g/m²)** | **Gurley Hill air permeability s/100 ml** |
|---|---|---|---|
| Barrier paper 1 | 120 | 25 | 1500 |
| Barrier paper 2 | 130 | 17 | 1000 |
| Barrier paper 3 | 240 | 19 | 300 |
| Uncoated bread bag paper | 500 | 25 | 35 |
| Bread bag paper coated with bioplastic | 500 | low | high |

As seen in Table 1, the water vapour transmission rate of the materials 2 according to the invention and the products 1 was clearly different from that of the materials and products of prior art in such a way that the water vapour transmission rate of materials according to the invention was clearly lower than in solutions of prior art. The Cobb value measured for materials according to the invention was similar to or lower than the value for uncoated bread bag paper, and higher than the value for bread bag paper coated with bioplastic. Air permeability was clearly lower for the materials according to the invention than for uncoated bread bag paper, but higher than for bread bag paper coated with bioplastic.

The crusts of fresh loafs of bread packed in materials according to the invention were still suitably thin and simultaneously crispy at the end of the three-day observation period. However, the crust of bread packed in uncoated bread bag paper was too hard and too thick after storage for three days. The crust of bread packed in material coated with bioplastic was moist (that is, the crust was no longer crispy) and thinner than desired after storage for three days.

The invention is not limited solely to the examples presented in Figs. 1 and 2 and the above description, but it may be modified within the scope of the appended claims.

## Claims

1. Material (2) for packaging foodstuff, the material comprising paper, **characterized in that** said paper is base paper (4) coated on at least one side with a coating (3), which coating consists of
- one or more flaky coating pigments comprising at least 50% of kaolin, and
- polyvinyl alcohol,
wherein
- the ratio between the flaky coating pigment and polyvinyl alcohol is between 50:50 and 70:30, and wherein
the content of the coating (3), in dry weight, is 1 to 7 g per m², and the Cobb water resistance of the material (2) is 20 to 45 g/m², when measured according to the standard ISO 535:1991, and the water vapour transmission rate at an air humidity of 50% and a temperature of 23°C is 80 to 400 g per m² per day.

2. The material according to claim 1, **characterized in that** the material (2) has the water vapour transmission rate 120 to 280 g per m² per day at an air humidity of 50% and a temperature of 23°C .

3. The material according to claim 1 or 2, **characterized in that** the KIT value of the material (2) is 1 to 2.

4. The material according to any of the preceding claims, **characterized in that** said base paper (4) is so-called machine glazed (MG) paper.

5. Food package comprising paper, **characterized in that** at least 50% of said food package (1) consists of material (2) according to any of the claims 1-4.

6. The food package according to claim 5, **characterized in that** the package is intended for packaging fresh bread or other bakery products.

## Patentansprüche

1. Material (2) zum Verpacken von Lebensmitteln, wobei das Material Papier umfasst, **dadurch gekennzeichnet, dass** es sich bei dem Papier um Trägerpapier (4) handelt, welches auf mindestens einer Seite mit einer Beschichtung (3) überzogen ist, wobei die Beschichtung aus
- einem oder mehreren flockenartigen Beschichtungspigmenten, die mindestens 50 % Kaolin umfassen,
und
- Polyvinylalkohol
besteht, wobei
- das Verhältnis zwischen dem flockenartigen Beschichtungspigment und Polyvinylalkohol zwischen 50:50 und 70:30 liegt, und wobei
der Gehalt an Beschichtung (3), nach Trockengewicht, 1 bis 7 g pro m² beträgt und das Material (2) einen Cobb-Wert der Wasserbeständigkeit von 20 bis 45 g/m² aufweist, wenn die Messung gemäß der Norm ISO 535:1991 erfolgt, und die Wasserdampfdurchlässigkeit bei einer Luftfeuchtigkeit von 50 % und einer Temperatur von 23 °C im Bereich von 80 bis 400 g pro m² pro Tag liegt.

2. Material gemäß Anspruch 1, **dadurch gekennzeichnet, dass** das Material (2) eine Wasserdampfdurchlässigkeit von 120 bis 280 g pro m² pro Tag bei einer Luftfeuchtigkeit von 50 % und einer Temperatur von 23 °C aufweist.

3. Material gemäß Anspruch 1 oder 2, **dadurch gekennzeichnet, dass** der Kit-Wert des Materials (2) 1 bis 2 ist.

4. Material gemäß beliebigen der vorhergehenden Ansprüche, **dadurch gekennzeichnet, dass** es sich bei dem Trägerpapier (4) um sogenanntes einseitig glattes Papier (machine glazed, MG) handelt.

5. Lebensmittelverpackung, die Papier umfasst, **dadurch gekennzeichnet, dass** mindestens 50 % der Lebensmittelverpackung (1) aus Material (2) gemäß beliebigen der Ansprüche 1 bis 4 besteht.

6. Lebensmittelverpackung gemäß Anspruch 5, **dadurch gekennzeichnet, dass** die Verpackung zum Verpacken von frischem Brot oder sonstigen Backwaren bestimmt ist.

## Revendications

1. Matériau (2) pour emballer des produits alimentaires, le matériau comprenant du papier, **caractérisé en ce que** ledit papier est un papier de base (4) revêtu sur au moins un côté d'un revêtement (3), lequel revêtement est constitué
- d'un ou de plusieurs pigments de revêtement floconneux comprenant au moins 50 % de kaolin, et
- d'alcool polyvinylique,
dans lequel
- le rapport entre le pigment de revêtement floconneux et l'alcool polyvinylique est compris entre 50:50 et 70:30, et dans lequel
la teneur du revêtement (3), en poids sec, va de 1 à 7 g par m², et la résistance à l'eau de Cobb du matériau (2) va de 20 à 45 g/m², lorsqu'elle est mesurée selon la norme ISO 535:1991, et un taux de transmission de vapeur d'eau à une humidité d'air de 50 % et une température de 23 °C va de 80 à 400 g par m² par jour.

2. Matériau selon la revendication 1, **caractérisé en ce que** le matériau (2) a un taux de transmission de vapeur d'eau de 120 à 280 g par m² par jour à une humidité d'air de 50 % et une température de 23 °C.

3. Matériau selon la revendication 1 ou la revendication 2, **caractérisé en ce que** la valeur KIT du matériau (2) est 1 à 2.

4. Matériau selon l'une quelconque des revendications précédentes, **caractérisé en ce que** ledit papier de base (4) est ce que l'on appelle un papier frictionné sur machine (MG).

5. Emballage alimentaire comprenant du papier, **caractérisé en ce qu'**au moins 50 % dudit emballage alimentaire (1) est constitué de matériau (2) selon l'une quelconque des revendications 1 à 4.

6. Emballage alimentaire selon la revendication 5, **caractérisé en ce que** l'emballage est destiné à emballer du pain frais ou d'autres produits de boulangerie.
